# EUROPEAN PATENT APPLICATION

(11) **EP 4 663 621 A1**
(43) Date of publication of application: **17.12.2025**
(21) Application number: 23921294.7
(22) Date of filing: 10.11.2023
(51) Int. Cl.: C05G 1/00, A01G 7/06

(54) **FERTILIZER COMPOSITION**

(30) Priority: 09.02.2023 JP 2023018305
(71) Applicant: FUJI PIGMENT CO., LTD., Kawanishi-shi, Hyogo-ken 666-0015 (JP); GS Alliance Co., Ltd., Kawanishi-shi, Hyogo, 666-0015 (JP)
(72) Inventor: MORI, Ryohei, Kawanishi-shi, Hyogo 666-0015 (JP)
(74) Representative: Appleyard Lees IP LLP
(86) International application number: PCT/JP2023/040586
(87) International publication number: WO 2024/166473

(57) **Abstract**

The present invention intends to provide: a fertilizer composition which is taken up by a cultivated plant to accelerate the growth of the plant and can cause the emission of fluorescence from the cultivated plant upon the irradiation with light; and a method for cultivating a plant efficiently using the fertilizer composition. Provided are: a fertilizer composition comprising 100 parts by mass of nitrogen-containing carbon oxide quantum dots, 0.1 to 1000 parts by mass of a phosphorus compound, and 0.1 to 100 parts by mass of a potassium salt; and a cultivation method including a step for feeding the fertilizer composition to a plant and/or a cultivation medium. The nitrogen-containing carbon oxide quantum dots are preferably graphene-based quantum dots having a nitrogen-containing functional group and a carbonyl group. The amount of nitrogen atoms and/or oxygen atoms is preferably 0.1 to 60 parts by mass per 100 parts by mass.

## Description

### TECHNICAL FIELD

The present invention relates to a fertilizer composition containing carbon quantum dots and to a cultivation method using such a fertilizer composition.

### BACKGROUND ART

In recent years, nanocarbon materials such as carbon nanotubes (CNTs) have been attracting attention for agricultural efficiency and environmental conservation. Although fertilizers have been widely used for the cultivation and growth of crops, conventional fertilizers are not always efficiently absorbed by target crop plants. Without undergoing microbial decomposition, for example, many general-purpose natural fertilizers cannot be absorbed by plants. Chemical fertilizers such as ammonium sulfate and ammonium nitrate do not require microbial decomposition but tend to produce a significantly high osmotic pressure when dissolved in water. Thus, such fertilizers cannot be used in the form of a high-concentration liquid fertilizer or applied directly to roots or leaves. It is reported that only about 50% or less of the amount of fertilizers added to soil is actually taken up by plants (see, for example, Non-Patent Document 1). This means that the remaining amount of fertilizers will not be absorbed or utilized by plants.

The unused fertilizer not only goes to waste but may also cause environmental pollution through rain-induced runoff and release into the atmosphere. This is like other agricultural chemicals such as insecticides, herbicides, and antimicrobial agents. In this regard, nano-sized fertilizers and other agricultural chemicals might easily pass between plant cells and be easily absorbed by plants without undergoing microbial decomposition. Such nano-sized chemicals might also be taken up by plants through not only roots but also leaves. If fertilizers are taken up in such a way by plants before being diffused or dissipated, the crop yield may increase due to improved nutrient utilization. Based on such a concept, recent studies have begun to explore the use of various nanocarbon materials, particularly carbon quantum dots, for agricultural applications (see, for example, Non-Patent Documents 1 and 2).

As used herein, the term "quantum dots" include nanoscale materials based on quantum chemistry and quantum mechanics, which are usually fine particles having an average diameter of approximately 0.5 to 100 nm. Some quantum dots have unique optical properties and have been studied for use as fluorescent materials for such applications as light-emitting devices, displays, and batteries (see Patent Documents 1 to 5). In the agricultural field, some quantum dots have been studied for use in devices that convert infrared or ultraviolet light to visible light suitable for photosynthesis, and some recent studies have reported using quantum dots for fertilizers. Carbon quantum dots have also been studied for use as carriers for agricultural chemicals such as disinfectants, mineral components such as zinc, copper, and iron, and genes for recombination. Some quantum dots are also considered a promising candidate material for use in a new cultivation method that includes monitoring, in real-time, the fluorescence state in plants based on their unique fluorescent properties; and providing an appropriate growth environment based on the monitoring (see Non-Patent Documents 1 and 2).

### Citation List

### Patent Document

Patent Document 1: Japanese Domestic Re-Publication of PCT International Publication No. WO2016/129441
Patent Document 2: Japanese Unexamined Patent Application, Publication No. 2017-43539
Patent Document 3: Japanese Unexamined Patent Application, Publication No. 2017-165633
Patent Document 4: Japanese Unexamined Patent Application (Translation of PCT Application), Publication No. 2017-538041
Patent Document 5: Japanese Unexamined Patent Application, Publication No. 2021-111574

### Non-Patent Document

Non-Patent Document 1: L. Zhu, et al., Plants, 2022, 11, 511
Non-Patent Document 2: J. Peralta-Videa, et al., Processes, 2020, 8, 445

### DISCLOSURE OF THE INVENTION

### Problems to be Solved by the Invention

Unfortunately, such application of nanocarbon materials for agriculture is still in early stages of investigation, and some reported cases can hardly be considered to sufficiently confirm the effectiveness and reproducibility. For example, Non-Patent Document 2 reports a study case showing that a fertilizer including carbon quantum dots increased plant growth and another study case showing that carbon quantum dots decreased total fresh weight. Most of the reported cases are based on short-term studies conducted in laboratories, and it remains to be investigated what types of nanocarbon materials are actually useful as fertilizers. The fluorescence from carbon quantum dots taken up by living organisms, such as fungi, has only been observed under microscope, and there has seemed to be no case report on visual observation of fluorescence from crop plants.

It is an object of the present invention to provide a solution to the problem described above and to provide a fertilizer composition that, when taken up by crop plants, can promote their growth and allows them to emit fluorescence upon exposure to light. It is another object of the present invention to provide a method for efficient cultivation of a plant, including: supplying such a fertilizer composition to the plant to promote its growth; and controlling the cultivation environment based on the fluorescence state. Means for Solving the Problems

As a result of diligent investigation for solving the problem, the inventors have found that nitrogen-containing oxidized carbon quantum dots, which are a nanocarbon material, can be used in combination with a specific amount of a phosphorus compound and a potassium salt to form a fertilizer composition useful for crop plant growth. The inventors have further found that, when cultivated and grown with such a fertilizer composition, plants can take up the carbon quantum dots in their body and consequently emit fluorescence upon exposure to light. The inventors have completed the present invention based on those findings.

Specifically, the present invention provides aspects (1) to (8) below.
(1) A fertilizer composition including:
   100 parts by mass of nitrogen-containing oxidized carbon quantum dots;
   0.1 to 1000 parts by mass of a phosphorus compound; and
   0.1 to 100 parts by mass of a potassium salt.
(2) The fertilizer composition according to aspect (1), wherein the nitrogen-containing oxidized carbon quantum dots are graphene-type quantum dots having a nitrogen-containing functional group and a carbonyl group.
(3) The fertilizer composition according to aspect (1) or (2), wherein 100 parts by mass of the nitrogen-containing oxidized carbon quantum dots contain 0.1 to 60 parts by mass of nitrogen atoms.
(4) The fertilizer composition according to any one of aspects (1) to (3), wherein 100 parts by mass of the nitrogen-containing oxidized carbon quantum dots contain 0.1 to 60 parts by mass of oxygen atoms.
(5) The fertilizer composition according to any one of aspects (1) to (4), wherein the phosphorus compound is a derivative of phosphoric acid.
(6) An aqueous fertilizer including the fertilizer composition according to any one of aspects (1) to (5) in a concentration of 0.001 to 90% derived from a solid content of the fertilizer composition.
(7) A cultivation method including supplying the fertilizer composition according to any one of aspects (1) to (5) to a plant and/or a cultivation medium.
(8) A cultivation method for a plant including:
   supplying the fertilizer composition according to any one of aspects (1) to (5) to the plant and/or a cultivation medium; and
   irradiating the plant with light at a wavelength of 200 to 900 nm and controlling a cultivation environment based on the state of light emission from the plant in response to the irradiation.

### Effects of the Invention

The fertilizer composition of the present invention can be efficiently taken up by crop plants and promote their growth. This may result in improved nutrient utilization and increased crop yield, which may improve agricultural efficiency. This may also reduce the runoff or diffusion of the unused fertilizer and thus reduce surrounding environment pollution. After being taken up by plants being cultivated, the fertilizer composition of the present invention allows the plants to emit fluorescence upon exposure to light. Thus, the condition of the plants can be monitored in real-time by monitoring the fluorescence state, and the cultivation environment can be controlled in response to the monitored condition, which will enable efficient cultivation of the plants.

### BRIEF DESCRIPTION OF THE DRAWINGS

FIG. 1 is a photograph showing how a crop plant grows in Example 1 and Comparative Examples 1 and 2; and
FIG. 2 is a photograph showing whether and how the crop plant emits fluorescence when irradiated with ultraviolet light in Example 2 and Comparative Example 2.

### PREFERRED MODE FOR CARRYING OUT THE INVENTION

Hereinafter, typical embodiments of the present invention will be described in detail. It will be understood that such embodiments are not intended to limit the present invention.

### «Fertilizer Composition»

An embodiment of the present invention is directed to a fertilizer composition including:
100 parts by mass of nitrogen-containing oxidized carbon quantum dots;
0.1 to 1000 parts by mass of a phosphorus compound; and
0.1 to 100 parts by mass of a potassium salt.

The fertilizer composition according to an embodiment contains all of nitrogen, phosphorus, and potassium, which are also called three fertilizer elements, and thus is useful for crop plant growth. In the fertilizer composition, nitrogen is a component of the carbon quantum dots, and thus the nitrogen source has a size on the order of nanometers even without undergoing microbial decomposition. Such quantum dots can easily pass between plant cells and easily be absorbed by plants. Such quantum dots are not in the form of a salt such as ammonium sulfate and thus can form a liquid fertilizer without a significant increase in osmotic pressure. Thus, the fertilizer composition can be supplied at a high concentration to crop plants and taken up by plants not only through their roots but also through their leaves. Moreover, even after being taken up by plants, the carbon quantum dots will exhibit their optical properties and emit fluorescence upon exposure to external light. Such properties can be used to determine the conditions of the plant being cultivated in real-time to adjust the conditions for cultivating the plant based on the fluorescence state. Thus, the fertilizer composition according to an embodiment can greatly contribute to agricultural efficiency. Hereinafter, the main components of the fertilizer composition will be described.

### <Nitrogen-Containing Oxidized Carbon Quantum Dots>

The nitrogen-containing oxidized carbon quantum dots are carbon-based quantum dots containing nitrogen and oxygen atoms. The nitrogen-containing oxidized carbon quantum dots typically have diameters of about 0.5 to about 100 nm and exhibit light-emitting properties, which are attributed to π bonding. The nitrogen-containing oxidized carbon quantum dots are commercially available from Fuji Shikiso Kogyo, GS Alliance, and other companies. Alternatively, the nitrogen-containing oxidized carbon quantum dots may be produced using a top-down process, a bottom-up process, or other techniques. The top-down process includes oxidation and nitriding of carbon quantum dots, graphite, or other materials. The bottom-up process includes subjecting low-molecular-weight compounds, such as a nitrogen compound and an oxygen-containing organic compound, to hydrothermal reactions to synthesize the nitrogen-containing oxidized carbon quantum dots.

### [Carbon Quantum Dots]

As used herein, the term "carbon quantum dots" refers to a nanoscale material having a hexagonal lattice structure composed primarily of SP² bonded carbon atoms. Examples of carbon quantum dots include, but are not limited to, graphene (in the narrow sense), carbon nanotubes (CNTs), fullerenes, carbon nanohorns, and carbon nanofibers. These carbon materials all have a graphene structure and thus can be broadly classified as graphene. Unless otherwise specified, hereinafter, the term "graphene" will be used in the broad sense to include CNTs, fullerenes, and other carbon materials.

The carbon quantum dots are commercially available from Sigma-Aldrich, Fuji Shikiso Kogyo, GS Alliance, Funakoshi, and Kishida Chemical. Alternatively, the carbon quantum dots may be produced using chemical vapor deposition (CVD), a method including laser ablation of a carbon target and chemical treatment of the ablated carbon, a method including chemical treatment of soot, carbon fibers, or graphite oxides, or a bottom-up process using low-molecular-weight compounds as mentioned above.

### [Top-Down Process]

The nitrogen-containing oxidized carbon quantum dots may be produced using, for example, a top-down process, which includes oxidation and nitriding of carbon quantum dots as mentioned above. The starting material for the top-down process may be graphite, which is lower in cost. As shown in Patent Document 3, for example, the top-down process may include oxidizing graphite to introduce oxygen-containing functional groups, such as carboxy groups, hydroxy groups, epoxy groups, or carbonyl groups; and then subjecting the oxidized graphite to delamination to produce graphene oxide firstly. The oxidation may be performed using concentrated nitric acid, sodium chlorate/fuming nitric acid, potassium permanganate/concentrated sulfuric acid, potassium dichromate/concentrated sulfuric acid, ozone, hydrogen peroxide, or other oxidizing agents. Thus, the term "oxidized carbon quantum dots" refers to carbon-based quantum dots having oxygen-containing functional groups, such as carboxy groups. Alternatively, as shown in Patent Document 4, graphene oxide may be produced by subjecting carbon fibers or other materials to electrochemical oxidative cleavage.

The top-down process may include reacting the resulting graphene oxide with a nitrogen compound to produce nitrogen-containing oxidized carbon quantum dots. As shown in Patent Document 3, for example, this step may include dispersing graphite oxide in an aqueous solution of a nitrogen compound; and processing the dispersion under pressure at a temperature of about 100°C to about 200°C. Examples of the nitrogen compound include, but are not limited to, urea, ammonia, thiourea, hydrazine, nitric acid esters, sodium nitrate, sodium nitrite, hydroxylamine, pyridine N-oxide, N-hydroxyalkyleneimine, sodium azide, sodium amide, carboxylic acid azide; alkylamines, such as methylamine, ethylamine, n-propylamine, isopropylamine, n-butylamine, tert-butylamine, n-pentylamine, and n-hexylamine, and halogen acid salts thereof; and diamines, such as ethylenediamine and propanediamine.

### [Bottom-Up Process]

The nitrogen-containing oxidized carbon quantum dots may also be produced using a bottom-up process such as the hydrothermal synthesis mentioned above. The bottom-up process includes using low-molecular-weight compounds as raw materials to build up molecules and is advantageous in that it can conveniently synthesize the target product with high yield and high reproducibility. The nitrogen-containing oxidized carbon quantum dots may be produced using any suitable raw materials, techniques, and conditions. For example, they may be produced using the methods described in Patent Documents 1 and 2. These patent documents describe production methods that include heating an oxygen-containing organic compound and a nitrogen compound at high temperature and high pressure to react them.

### (Oxygen-Containing Organic Compound)

The oxygen-containing organic compound for use as a raw material may be any organic compound having an oxygen atom. Preferred examples of the oxygen-containing organic compound include various organic acids and sugars shown in Patent Documents 1 and 2. Most of such organic compounds are safe for living organisms and suitable for use as raw materials for components of the fertilizer composition. The nitrogen-containing oxidized carbon quantum dots can also be efficiently produced by hydrothermal synthesis. Two or more oxygen-containing organic compounds may be used in combination for the production thereof.

The oxygen-containing organic compound may be any type of organic acid. Examples of the organic acid include, but are not limited to, aliphatic hydroxycarboxylic acids, such as glycolic acid, lactic acid, tartronic acid, glyceric acid, hydroxybutyric acid, 2-hydroxybutyric acid, 3-hydroxybutyric acid, γ-hydroxybutyric acid, malic acid, tartaric acid, citramalic acid, citric acid, isocitric acid, leucine acid, mevalonic acid, pantothenic acid, ricinoleic acid, ricinelaidic acid, cerebronic acid, quinic acid, glyceric acid, gluconic acid, glucuronic acid, and shikimic acid; aromatic hydroxycarboxylic acids, such as salicylic acid, creosote acid, vanillic acid, syringic acid, pyrocatechuic acid, resorcylic acid, protocatechuic acid, gentisic acid, orsellinic acid, gallic acid, mandelic acid, benzylic acid, atrolactic acid, cinnamic acid, melilotic acid, phloretic acid, coumaric acid, umbellic acid, caffeic acid, ferulic acid, and sinapinic acid; polycarboxylic acids, such as oxalic acid, malonic acid, succinic acid, fumaric acid, and itaconic acid; and ascorbic acid. In particular, the nitrogen-containing oxidized carbon quantum dots can be easily produced using a hydroxypolycarboxylic acid, such as citric acid, malic acid, or tartaric acid.

The oxygen-containing organic compound may also be any type of sugar, examples of which include, but are not limited to, monosaccharides including aldoses, such as glyceraldehyde, erythrose, threose, ribose, lyxose, xylose, arabinose, allose, talose, gulose, glucose, altrose, mannose, galactose, and idose; ketoses, such as dihydroxyacetone, erythrulose, xylulose, ribulose, psicose, fructose, sorbose, and tagatose; and disaccharides, such as sucrose (saccharose), lactulose, lactose (milk sugar), maltose (malt sugar), trehalose, and cellobiose.

### (Nitrogen Compound)

The nitrogen compound may be any type, such as urea, ammonia, or sodium nitrate, which can also be used as a raw material for the top-down process described above. Two or more nitrogen compounds may also be used in combination. The nitrogen compound is preferably an organic compound having an amino group. For example, an organic amine compound or an amino acid can be used to produce nitrogen-containing oxidized carbon quantum dots that can be highly effective in promoting plant growth or emit strong fluorescence in the plant body.

The organic compound having an amino group may be any type. Examples include, but are not limited to, aliphatic monoamines, such as hexylamine and N,N-dimethylethylenediamine; aliphatic diamines, such as ethylenediamine and hexamethylenediamine; aromatic amines, such as phenylenediamine; and amino group-containing polyethylene glycols and amino group-containing polypropylene glycols.

In case of any residue of the raw material remaining in the produced nitrogen-containing oxidized carbon quantum dots, the nitrogen compound is preferably an amino acid. The amino acid will be less harmful to crop plants or surrounding environments even if it remains unreacted in the quantum dot product. Any type of amino acid may be used, such as glycine, alanine, valine, phenylalanine, threonine, lysine, asparagine, arginine, tryptophan, serine, glutamic acid, aspartic acid, ornithine, thyroxine, cysteine, cystine, leucine, isoleucine, proline, tyrosine, glutamine, histidine, methionine, or threonine.

### (Hydrothermal Reaction)

The nitrogen-containing oxidized carbon quantum dots may be produced by the reaction between the nitrogen-containing organic compound and the nitrogen compound described above. The reaction may be performed at atmospheric pressure or may be performed using any solvent under any suitable conditions. Preferably, the reaction is performed under high-temperature, high-pressure conditions in water, namely using hydrothermal synthesis method. The hydrothermal reaction can conveniently synthesize the nitrogen-containing oxidized carbon quantum dots with high yield and high reproducibility.

The hydrothermal reaction may be performed under any suitable conditions. Preferably, the hydrothermal reaction is performed using an autoclave at a temperature of about 100°C to about 500°C, especially about 120°C to about 300°C or about 150°C to about 200°C, at a pressure of about 200 kPa to about 2 MPa, especially about 500 kPa to about 1 MPa, for a time period of about 1 minute to about 72 hours, especially about 1 to about 12 hours. As described in Patent Document 1, an acid catalyst may be added to the reaction system. Examples of the acid catalyst include, but are not limited to, inorganic acids, such as hydrochloric acid, sulfuric acid, nitric acid, and phosphoric acid; organic acids, such as sulfonic acids including p-toluenesulfonic acid; and solid acid catalysts, such as cationic ion-exchange resins and ion-exchange membranes. The solid acid catalysts may also be commercially available products, such as those listed in Patent Document 1. The reaction may also be performed using phosphoric acid as a catalyst so that the step of adding the phosphorus compound, which will be described later, can be omitted.

### (Form of Nitrogen-Containing Oxidized Carbon Quantum Dots)

The nitrogen-containing oxidized carbon quantum dots may be any type of carbon nanomaterial containing nitrogen and oxygen atoms as mentioned above. For example, they may be nitrogen and oxygen atoms-containing graphene (in the narrow sense), carbon nanotubes (CNTs), fullerenes, carbon nanohorns, or carbon nanofibers. They may contain nitrogen and oxygen atoms in any chemical form.

For the promotion of crop plant growth, the nitrogen-containing oxidized carbon quantum dots are preferably graphene-type quantum dots having a nitrogen-containing functional group and a carbonyl group. As used herein, the term "graphene-type" is intended to include a wide variety of graphene materials as mentioned above, including graphene (in the narrow sense), CNTs, and carbon nanofibers. The term "carbonyl group" is also used in a broad sense, encompassing not only carbonyl groups in ketones and aldehydes but also those in carboxy groups of carboxylic acids and derivatives thereof such as salts thereof, ester groups, acid anhydride groups, amide groups, and all other functional groups having a C=O structure. The nitrogen-containing oxidized carbon quantum dots are more preferably graphene (in the narrow sense) having a nitrogen-containing functional group and a carbonyl group and/or CNTs having a nitrogen-containing functional group and a carbonyl group, especially graphene (in the narrow sense) having a nitrogen-containing functional group and a carbonyl group.

### (Particle Size)

The nitrogen-containing oxidized carbon quantum dots may have any average particle size (diameter). For example, the nitrogen-containing oxidized carbon quantum dots may have an average particle size of about 0.5 to about 100 nm, which is the typical average size of carbon quantum dots. As used herein, the term "diameter" refers to the distance between one end to another end of a nitrogen-containing oxidized carbon quantum dot particle, regardless of its center. This means that the nitrogen-containing oxidized carbon quantum dots may have non-spherical shapes, such as disk shapes, spheroidal shapes, or irregular polygonal shapes. For ease of absorption by crop plants, the nitrogen-containing oxidized carbon quantum dots preferably have an average particle size of about 1.0 to about 50 nm, more preferably about 1.5 to about 20 nm, even more preferably about 2.0 to about 10 nm.

### (Form of Nitrogen and Oxygen Atoms)

The nitrogen-containing oxidized carbon quantum dots may contain nitrogen and oxygen atoms in any form. For the promotion of crop plant growth, at least some of the nitrogen and oxygen atoms in the quantum dots are preferably in a nitrogen-containing functional group and a carbonyl group, respectively. For example, the nitrogen-containing functional group may be amino, imino, or amide or may be incorporated in the graphene structure. The carbonyl group may be in any form as mentioned above, such as a ketone group, an aldehyde group, a carboxy group, an ester group, an acid anhydride group, or an amide group. In particular, the nitrogen-containing oxidized carbon quantum dots having nitrogen and oxygen atoms in the form of an amino group, an imino group, a carboxy group, and/or an amide group is advantageous in that they have high affinity for water and can be easily absorbed by crop plants.

### (Nitrogen and Oxygen Contents)

The nitrogen-containing oxidized carbon quantum dots may contain any amount of nitrogen and oxygen atoms. For example, 100 parts by mass of the nitrogen-containing oxidized carbon quantum dots may contain more than 60 parts by mass of nitrogen atoms that form melamine-like structures. The nitrogen-containing oxidized carbon quantum dots with a higher nitrogen atom content can be more effective as a nitrogen fertilizer.

In view of the properties of the carbon quantum dots and for ease of synthesis, 100 parts by mass of the nitrogen-containing oxidized carbon quantum dots preferably contain about 0.1 to about 60 parts by mass, more preferably about 0.5 to about 40 parts by mass, even more preferably about 2 to about 25 parts by mass of nitrogen atoms. For similar reasons, 100 parts by mass of the nitrogen-containing oxidized carbon quantum dots preferably contain about 0.1 to about 60 parts by mass, more preferably about 0.3 to about 30 parts by mass, even more preferably about 0.5 to about 15 parts by mass of oxygen atoms. For the carbon quantum dots to exhibit optical properties, 100 parts by mass of the nitrogen-containing oxidized carbon quantum dots preferably contains about 1 to about 60 parts by mass, more preferably about 2 to about 40 parts by mass, even more preferably about 10 to about 30 parts by mass of nitrogen and oxygen atoms in total.

The nitrogen and oxygen contents may be adjusted by changing the raw material proportion or reaction conditions for the production of the nitrogen-containing oxidized carbon quantum dots. For example, with reference to Patent Documents 1 and 2, the amount ratio of the oxygen-containing organic compound to the nitrogen compound may be changed within the range of about 10:1 to about 1:10, preferably about 5:1 to about 1:5, more preferably about 3:1 to about 1:3 so that the nitrogen-containing oxidized carbon quantum dots can be produced with desired nitrogen and oxygen atom contents.

### <Phosphorus Compound>

The fertilizer composition according to an embodiment contains 100 parts by mass of the nitrogen-containing oxidized carbon quantum dots and 0.1 to 1000 parts by mass of a phosphorus compound. As mentioned above, phosphorus, nitrogen, and potassium are important elements also known as the three fertilizer elements. When added to the fertilizer composition, the phosphorus compound will significantly enhance the plant growth-promoting effect.

The phosphorus compound may be in any form. Examples of the phosphorus compound include, but are not limited to, phosphoric acid, phosphorus acid, hypophosphoric acid, hypophosphorous acid, pyrophosphoric acid, trimetaphosphoric acid, tetrametaphosphoric acid, pyrophosphorous acid, polymetaphosphorous acid, monoperphosphoric acid, and diperphosphoric acid; and metal salts thereof, ammonium salts thereof, esters thereof, and nitrides thereof. Two or more phosphorus compounds may also be used. The phosphorus compound may be a phosphoric acid derivative, which can particularly enhance the effect of promoting crop plant growth. In particular, the phosphorus compound is preferably orthophosphoric acid, a salt thereof, or a derivative thereof.

Some or all of the phosphorus compound molecules may have undergone a reaction with functional groups in the nitrogen-containing oxidized carbon quantum dots. Alternatively, the phosphorus compound may be doped into or supported on the nitrogen-containing oxidized carbon quantum dots. The optical properties of the nitrogen-containing oxidized carbon quantum dots can be modified by doping with the phosphorus compound. For example, such doping makes it possible to convert the nitrogen-containing oxidized carbon quantum dots that typically emit blue to blue-violet fluorescence upon exposure to ultraviolet light, for example, to those that emit red fluorescence upon exposure to ultraviolet or longer wavelength light.

The fertilizer composition containing 100 parts by mass of the nitrogen-containing oxidized carbon quantum dots preferably contains 1 to 500 parts by mass, more preferably 10 to 200 parts by mass, even more preferably 20 to 150 parts by mass, furthermore preferably 30 to 100 parts by mass of the phosphorus compound. In addition, for example, the molar ratio of carbon atoms in the nitrogen-containing oxidized carbon quantum dots to phosphorus atoms (C:P atom molar ratio) is preferably 1:10 to 100:1, more preferably 1:2 to 50:1, even more preferably 1:1 to 20:1, furthermore preferably 3:1 to 10:1.

### <Potassium Salt>

The fertilizer composition according to an embodiment containing 100 parts by mass of the nitrogen-containing oxidized carbon quantum dots further contains 0.1 to 100 parts by mass of a potassium salt. The potassium salt can also significantly enhance the plant growth-promoting effect.

The potassium salt may be any type, such as any of various known potassium salts. Examples include, but are not limited to, inorganic salts, such as potassium chloride, potassium nitrate, potassium sulfate, potassium hydrogen sulfate, potassium carbonate, potassium bicarbonate, and potassium sodium carbonate; and potassium salts of organic acids, such as potassium acetate, potassium propionate, potassium oxalate, potassium tartrate, potassium salts of long-chain carboxylic acids, such as potassium stearate, potassium benzoate, potassium salicylate, and potassium sulfonate. A single compound that can serve as both the phosphorus compound and the potassium salt may also be used, such as potassium phosphate or potassium hydrogen phosphate. In the nitrogen-containing oxidized carbon quantum dots, carboxy groups or phosphoric acid may also form a potassium salt. To adjust the pH of the fertilizer composition to around 6 to 7, the potassium salt is preferably a weak acid salt, such as potassium carbonate or potassium carboxylate, depending on the type of the phosphorus compound or the nitrogen-containing oxidized carbon quantum dots used in combination with it.

The fertilizer composition containing 100 parts by mass of the nitrogen-containing oxidized carbon quantum dots preferably contains 1 to 80 parts by mass, more preferably 2 to 50 parts by mass, even more preferably 5 to 30 parts by mass of the potassium salt. In addition, for example, the molar ratio of carbon atoms in the nitrogen-containing oxidized carbon quantum dots to potassium atoms (C:K atom molar ratio) is preferably 1:1 to 100:1, more preferably 10:1 to 50:1, even more preferably 20:1 to 30:1.

### <Preparation of the Fertilizer Composition>

The fertilizer composition according to an embodiment can be prepared by mixing the specified amounts of the nitrogen-containing oxidized carbon quantum dots, the phosphorus compound, and the potassium salt described above. The mixing may be performed using any suitable method. For example, the mixing process may include dry-blending the components or dispersing or dissolving the components in water and mixing them. Specifically, in a case where the nitrogen-containing oxidized carbon quantum dots are produced in the form of an aqueous dispersion by hydrothermal synthesis, the fertilizer composition may be prepared by mixing, into the aqueous dispersion, the phosphorus compound and the potassium salt or an aqueous solution of them. In a case where phosphoric acid is used as a catalyst for the hydrothermal synthesis as discussed above, the phosphoric acid can serve as the phosphorus compound to form the fertilizer composition. The potassium salt may also be added at the stage of hydrothermal synthesis. Like the phosphorus compound, the potassium salt may also be doped into or supported on the nitrogen-containing oxidized carbon quantum dots.

While the present invention should not be bound by a specific theory, the reason for the advantageous effect of the fertilizer composition according to an embodiment may be that it contains nitrogen, phosphorus, and potassium (three fertilizer elements) in a good balance and that nitrogen is contained in the nitrogen-containing oxidized carbon quantum dots (a nanosized carbon material). The nanosized material can easily pass between plant cells and can be easily taken up by plants. Unlike ammonium sulfate, the nanosized material will not significantly increase osmotic pressure and thus can be easily absorbed by roots. In addition, the fertilizer composition can be in the form of a liquid dispersion rather than a solution, so that, when added to a cultivation medium, it will be less likely to run off during rainfall and thus less likely to go to waste. In particular, in a case where the phosphorus compound and the potassium salt are doped into or supported on the nitrogen-containing oxidized carbon quantum dots, they can be easily taken up together with nitrogen by plants. The fertilizer composition can be absorbed not only by roots but also by leaves of crop plants. Therefore, the fertilizer composition contributes to a reduction in waste or environmental pollution caused by fertilizer runoff.

### <Additional Component>

Besides the components described above, the fertilizer composition according to an embodiment may include a general-purpose, natural or chemical fertilizer, such as ammonium sulfate, ammonium nitrate, ammonium phosphate, calcium superphosphate, or fused phosphate; a mineral, such as calcium, magnesium, iron, manganese, copper, zinc, nickel, or boron; a non-fertilizer agricultural chemical, such as a herbicide, an insecticide, a microbicide, an antibacterial agent, a rodenticide, or a pH adjuster; a gene for recombination; or any other additional component. Such an additional component may be supported on the nitrogen-containing oxidized carbon quantum dots.

The fertilizer composition according to an embodiment may be a liquid composition, such as a solution or dispersion of the components in water, glycerin, or any other medium. In particular, the fertilizer composition is preferably an aqueous fertilizer containing water as a main solvent. The present invention also encompasses an aqueous fertilizer containing 0.01 to 90% by mass of solids of the fertilizer composition described above. The aqueous fertilizer preferably has a solid content of 0.01 to 50% by mass, more preferably 0.1 to 30% by mass. As mentioned above, the fertilizer composition according to an embodiment can be absorbed by plants through leaves. The aqueous fertilizer to be absorbed in such a manner preferably has a slightly lower solid content, such as 0.01 to 20% by mass, especially 0.1 to 10% by mass.

### «Cultivation Method»

As mentioned above, the use of the fertilizer composition according to an embodiment will lead to an improvement in agricultural efficiency or a reduction in environmental pollution. The present invention also encompasses a cultivation method including the step of supplying the fertilizer composition described above to a plant and/or a cultivation medium. The fertilizer composition according to an embodiment may be supplied in the form of a powder or in any other solid form to a cultivation medium, such as soil. Alternatively, the fertilizer composition according to an embodiment may be supplied in the form of an aqueous fertilizer to a cultivation medium or water for hydroponic culture or directly to the plant body. For example, the aqueous fertilizer may be applied to crop plant leaves and surrounding portions so that most of the nutrients in the fertilizer can be absorbed by the plant body.

As mentioned above, the fertilizer composition according to an embodiment can be easily absorbed by crop plants, and thus the nitrogen-containing oxidized carbon quantum dots (one of the main components) can be easily taken up by the plant body. Therefore, when cultivated with the fertilizer composition according to an embodiment, plants can emit fluorescence from the quantum dots therein upon exposure to external light. In some cases, for example, such plants can emit blue to blue-violet fluorescence upon exposure to ultraviolet light. Thus, how the fertilizer is taken up by plants being cultivated can be evaluated from the state of fluorescence monitored when the plants are irradiated with light with a specific wavelength.

In this regard, the wavelength of the irradiation light at which the quantum dots can react and the wavelength of the emitted fluorescence depend on the type of the nitrogen-containing oxidized carbon quantum dots and on the condition of the plant that has taken up the quantum dots. In some cases, for example, the nitrogen-containing oxidized carbon quantum dots doped with a large amount of the phosphorus compound can emit red fluorescence when exposed to ultraviolet light or light with a wavelength longer than that of ultraviolet light. In addition, when crop plants undergo stress due to nutritional deficiency or changes in temperature or humidity conditions, hydrogen peroxide and nitric monoxide may be generated in the plant body and bind to the nitrogen-containing oxidized carbon quantum dots to attenuate the fluorescence or change the wavelength of fluorescence (see Non-Patent Document 1). Such a phenomenon can also be utilized for yield expansion and improvement in agricultural efficiency. For example, the condition of crop plants may be monitored in real-time from the state of fluorescence, and the cultivation environment may be controlled in response to the monitored condition, which enables efficient growth of the crop plants.

The present invention also encompasses a cultivation method for a plant including the steps of: supplying the fertilizer composition described above to the plant and/or a cultivation medium; irradiating the plant with light having a wavelength of 200 to 900 nm, especially 250 to 500 nm; and controlling the cultivation environment based on how the plant emits light when irradiated with the light. The wavelength of the irradiation light may be selected depending on the type of the nitrogen-containing oxidized carbon quantum dots (a component of the fertilizer composition). For example, the nitrogen-containing oxidized carbon quantum dots almost not doped with the phosphorus compound or the like can often react with ultraviolet light to emit fluorescence. Thus, such nitrogen-containing oxidized carbon quantum dots may be irradiated with light having a wavelength of about 280 to about 460 nm, especially about 320 to about 400 nm. As an example, a commercially-available versatile UV lamp may be used which emits light with a wavelength of around 365 nm. Alternatively, the nitrogen-containing oxidized carbon quantum dots doped with a large amount of phosphorus (e.g., about 0.1 to about 30.0% by mass of phosphorus) may be irradiated with light having a wavelength of about 320 to about 480 nm, especially about 340 to about 440 nm.

For use in plant cultivation, the fertilizer composition according to an embodiment may contain a gene or genetic elements for recombination, supported on the nitrogen-containing oxidized carbon quantum dots, so that the gene or genetic elements can be transported into the plant body. Thus, the fertilizer composition and cultivation method according to the present invention can increase crop yield and agricultural efficiency through improvement in fertilizer nutrient utilization, cultivation environment control based on fluorescence measurements, and modification of crop plants and can also contribute to a reduction in environmental pollution caused by the runoff or diffusion of unused fertilizers.

### EXAMPLES

Hereinafter, the present invention will be specifically described with reference to examples. It will be understood that the examples are only for illustrating specific modes and embodiments for easy understanding of the concept and scope of the present invention set forth in the attached claims and are not intended to limit the present invention at all.

### [Example 1]

GS QD Graphene-F in Water manufactured by GS Alliance (nitrogen-containing graphene oxide hydrothermally synthesized using a phosphoric acid catalyst, which has a C:N:P₂O₅ mass ratio of about 46:14:40 and a C:N:P molar ratio of about 72:18:10 and is in the form of an aqueous dispersion with a solid content of about 20%), which corresponds to nitrogen-containing oxidized carbon quantum dots, was used to form a fertilizer composition. GS QD Graphene-F in Water (1.00 g) was diluted with water to 100 mL. K₂CO₃ (12 mg) was added to the dilution and dissolved, and then thoroughly stirred to form an aqueous fertilizer (with a molar ratio of carbon atoms (in the nitrogen-containing oxidized carbon quantum dots) : phosphorus atoms : potassium atoms of about 100 : 14 : 4).

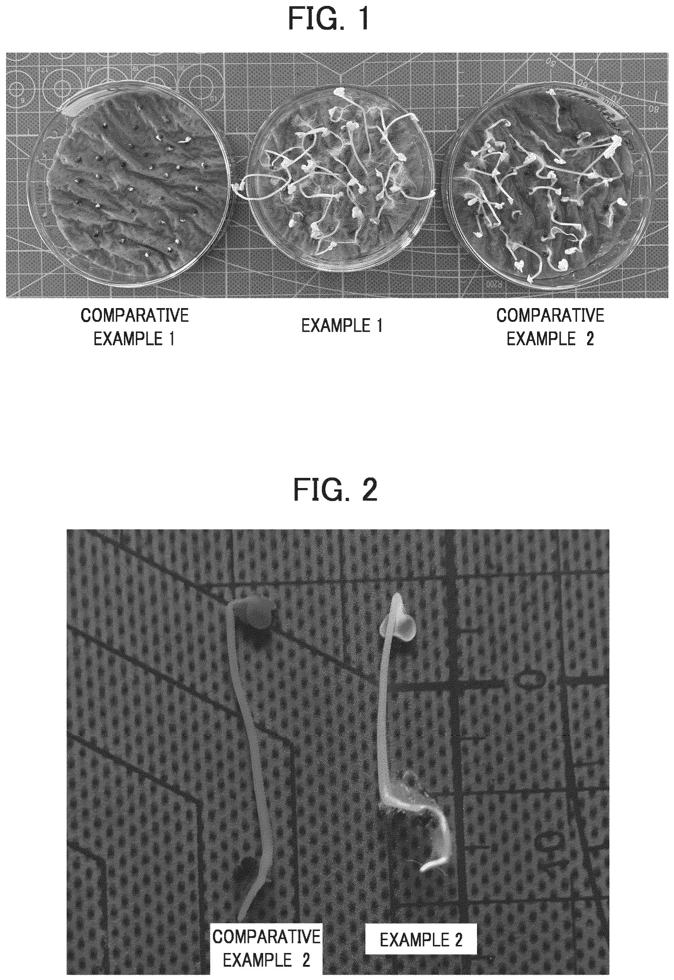

A paper sheet was immersed in the resulting aqueous fertilizer and then placed on a petri dish. Potherb mustard seeds were sown on the paper sheet and then allowed to stand at room temperature, which was followed after 48 hours by observation and photographing. The photographing result is shown in FIG. 1. It shows that the potherb mustard sprouted and grew well.

### [Comparative Example 1]

The same procedure was performed as in Example 1 except that tap water was used instead of the aqueous fertilizer. Observation after 48 hours the seeding showed that the potherb mustard barely sprouted and grew hardly (see FIG. 1).

### [Comparative Example 2]

The same procedure was performed as in Example 1 except that a 1/500 dilution of a commercially available aqueous fertilizer containing nitrogen, phosphorus, and potassium (a home gardening compound fertilizer manufactured by Kiyo Jochugiku) was used instead. Observation 48 hours after the seeding showed that the potherb mustard sprouted and grew well (see FIG. 1).

It should be noted that Example 1 and Comparative Examples 1 and 2 were performed at the same time in the same environment for the photographing (see FIG. 1). FIG. 1 demonstrates that the fertilizer composition according to the present invention promotes crop plant growth and is as effective as or more effective than a commercially-available, general-purpose, chemical fertilizer.

### [Example 2]

In a similar manner to Example 1, GS QD Graphene in Water manufactured by GS Alliance (nitrogen-containing graphene oxide hydrothermally synthesized using a phosphoric acid catalyst, which has a C:N:P₂O₅ mass ratio of about 43:16:41 and a C:N:P molar ratio of about 68:21:11 and is in the form of an aqueous dispersion with a solid content of about 20%), which corresponds to nitrogen-containing oxidized carbon quantum dots, was used to form an aqueous fertilizer (a fertilizer composition with a molar ratio of carbon atoms (in the nitrogen-containing oxidized carbon quantum dots) : phosphorus atoms : potassium atoms of about 100 : 16 : 4).

### (Cultivation Test)

Using the resulting aqueous fertilizer, the same procedure was performed as in Example 1. As a result, the potherb mustard was observed to sprout and grow well.

### (Fluorescence Test)

A sprout of the potherb mustard was picked up and placed on a paper sheet 48 hours after the seeding and then irradiated with 365 nm wavelength light from an ultraviolet lamp placed above. The result of photographing the potherb mustard sample irradiated with light is shown in FIG. 2 (right). The figure shows that the potherb mustard cultivated with the fertilizer composition according to the present invention emitted fluorescence in response to the ultraviolet light. The emitted fluorescence was blue.

In addition to the potherb mustard sample obtained in Example 2, FIG. 2 also shows the result of the fluorescence test of a potherb mustard sample obtained in Comparative Example 2 (left). It should be noted that Example 2 and Comparative Example 2 were performed at the same time under the same environmental conditions as in Example 1. The sample of Comparative Example 2 (left) placed parallel to that of Example 2 and irradiated with ultraviolet light under the same conditions did not emit fluorescence. This means that the fluorescence from the sample of Example 2 was derived from the nitrogen-containing oxidized carbon quantum dots taken up by the potherb mustard.

The present experimental results demonstrate that the fertilizer composition according to the present invention can sufficiently promote crop plant growth. The results also show that crop plants can take up the nitrogen-containing oxidized carbon quantum dots and emit visually observable fluorescence derived from the quantum dots taken up by them. This suggests that an efficient cultivation method should be achievable which includes cultivating crop plants using the fertilizer composition containing the quantum dots; evaluating, based on the state of fluorescence from the crop plants, how the crop plants take up the fertilizer and what condition the crop plants have; and controlling the cultivation conditions in real-time based on the result of the evaluation. The present invention, which can increase crop yield by promoting crop plant growth and reduce environmental pollution caused by fertilizer runoff, is significantly advantageous.

## Claims

1. A fertilizer composition comprising:
100 parts by mass of nitrogen-containing oxidized carbon quantum dots;
0.1 to 1000 parts by mass of a phosphorus compound; and
0.1 to 100 parts by mass of a potassium salt.

2. The fertilizer composition according to claim 1, wherein the nitrogen-containing oxidized carbon quantum dots are graphene-type quantum dots having a nitrogen-containing functional group and a carbonyl group.

3. The fertilizer composition according to claim 1 or 2, wherein 100 parts by mass of the nitrogen-containing oxidized carbon quantum dots contain 0.1 to 60 parts by mass of nitrogen atoms.

4. The fertilizer composition according to claim 1 or 2, wherein 100 parts by mass of the nitrogen-containing oxidized carbon quantum dots contain 0.1 to 60 parts by mass of oxygen atoms.

5. The fertilizer composition according to claim 1 or 2, wherein the phosphorus compound is a derivative of phosphoric acid.

6. An aqueous fertilizer comprising the fertilizer composition according to claim 1 or 2 in a concentration of 0.001 to 90% derived from a solid content of the fertilizer composition.

7. A cultivation method comprising supplying the fertilizer composition according to claim 1 or 2 to a plant and/or a cultivation medium.

8. A cultivation method for a plant comprising:
supplying the fertilizer composition according to claim 1 or 2 to the plant and/or a cultivation medium; and
irradiating the plant with light at a wavelength of 200 to 900 nm and controlling a cultivation environment based on a state of light emission from the plant in response to the irradiation.
